# EUROPEAN PATENT SPECIFICATION

(11) **EP 3 146 873 B1**
(45) Date of publication and mention of the grant of the patent: **25.04.2018**
(21) Application number: 16190704.3
(22) Date of filing: 26.09.2016
(51) Int. Cl.: A47G 25/00, A47F 5/00, A47G 25/48, D06F 55/02, F16B 2/20

(54) **HANGER DEVICE FOR HANGING AN OBJECT ON A SUPPORT**
HÄNGEVORRICHTUNG ZUM AUFHÄNGEN EINES OBJEKTS AUF EINEM TRÄGER
DISPOSITIF DE SUSPENSION D'UN OBJET À UN SUPPORT

(30) Priority: 25.09.2015 IT UB201571599 U
(43) Date of publication of application: 29.03.2017
(73) Proprietor: Benatti, Matteo Andrea, 20147 Milano (IT)
(72) Inventor: Benatti, Matteo Andrea, 20147 Milano (IT)
(74) Representative: Cernuzzi, Daniele

(56) References cited:
- DE-U- 1 915 123
- GB-A- 877 899
- US-A- 5 732 921

## Description

The present invention relates to a hanger device for hanging an object on a support, in particular in a shop, in an exhibition environment, in a treatment or storage facility, etc.

In particular, the hanger device is suitable to hang fruit, vegetables and the like, but also other foodstuffs, as well as any other type of objects, such as items of clothing, accessories, etc.

Various devices are known for hanging objects, in particular items of clothing and accessories, but also for hanging fruit.

Relevant examples of hanger devices are disclosed by DE1915123U, GB877899A and US5732921A.

The known devices are not fully satisfactory, especially in terms of manufacturing simplicity, practicality of use, effectiveness and versatility.

The object of the present invention is to overcome the drawbacks of the prior art by providing a hanger device that is particularly simple and inexpensive to manufacture and at the same time simple and effective to use, as well as versatile, thereby suited for use with a variety of different objects and in particular (but not limited to) various types of fruits and vegetables.

In accordance with this purpose, therefore, the present invention relates to a hanger device to hang an object on a support as defined essentially in the appended claim 1 and, in its additional features, in the dependent claims.

The hanger device of the invention is simple and inexpensive to manufacture and fully suited, in terms of structure and mechanical strength, to the intended use, in particular being simple and effective to use, as well as very versatile, thereby suited for use with a variety of different objects, including (but not limited to) various types of fruits and vegetables.

Further features and advantages of the present invention will be apparent from the description of the following non-limiting embodiments with reference to the figures of the accompanying drawings, wherein:
- Figure 1 is a perspective view of a hanger device according to a first embodiment of the invention;
- Figure 2 is a perspective view of a second embodiment of the invention.

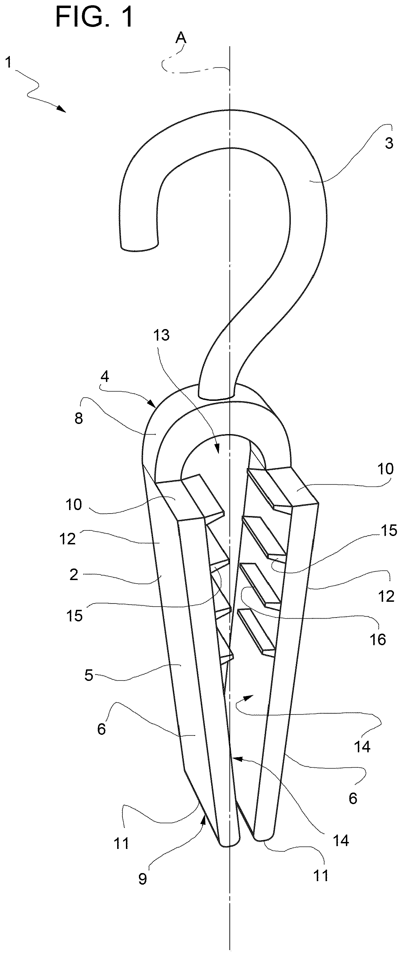

With reference to Figure 1, a hanger device 1 extends along a longitudinal axis A and comprises a preferably monolithic clamp body 2, and a suspension hook 3 that projects from a first longitudinal end 4 of the clamp body 2.

Preferably, the clamp body 2 consists of a single monolithic piece 5; advantageously, the piece 5 also includes the hook 3, i.e. the device 1 is composed of a single monolithic piece 5 formed by the clamp body 2 and the hook 3; the piece 5 can be made, for example, of polymeric (plastic), metal or other materials; different parts of the piece 5 can also be made of different materials.

The clamp body 2 comprises a pair of arms 6 facing one another substantially along the axis A and spaced laterally from one another; and a connecting portion 8 substantially transverse to the axis A and located at the end 4 which joins the arms 6.

The arms 6 extend from the connecting portion 8 towards a second end 9, opposite to the end 4, of the clamp body 2.

Each arm 6 has a root end 10 joined to the connecting portion 8, and a free end 11, opposite to the root end 10.

The arms 6 are joined to one another only at the root ends 10, while the free ends 11 are spaced from one another.

In the embodiment of Figure 1, the arms 6 are substantially rectilinear and inclined towards one another, in particular converging towards one another at their respective free ends 11.

It is understood that the arms 6 can have different shapes and inclinations, and also be substantially parallel.

The arms 6 define respective closed lateral flanks 12 of the clamp body 2 and delimit an inner space 13 which is frontally-posteriorly, and also superiorly-inferiorly, open and laterally closed by the flanks 12, i.e. by the arms 6.

The connecting portion 8 which joins the arms 6 is arranged eccentric to the axis A, i.e. is not arranged along the axis A but is shifted behind the axis A.

The arms 6 have respective inner faces 14 facing one another and are provided with respective transversal teeth 15 which extend towards one another from the faces 14 to clamp in use a portion of the object to be hung.

Each arm 6 is provided with at least one tooth 15 protruding from the respective face; preferably, as shown in Figure 1, each arm 6 has a series of parallel teeth 15 spaced from one another along the arm 6.

In particular, the teeth 15 are shaped as flat and elongated blades, which extend transversely from the face 14, substantially perpendicular to the face 14 or inclined with respect to the face 14, for example inclined towards the root end 10.

The teeth 15 of each arm 6 extend transversely on the arm 6 and are longitudinally elongated in a direction transverse to the arm 6.

Each tooth 15 terminates with a thin free-end edge 16 elongated transversely to the arm 6 and facing the opposite arm 6. Preferably, the edge 16 is substantially rectilinear, but can also be differently shaped.

Preferably, the teeth 15 are tapered towards the respective free-end edges 16.

In the example of Figure 1, the teeth 15 are equally spaced from one another along each arm 6 and the teeth 15 of the arms 6 can be substantially aligned with each other; however, it is understood that the teeth 15 on each arm 6 can be variously and differently spaced from one another and that the teeth 15 of the arms 6 can be staggered with respect to each other.

Although Figure 1 shows that each arm 6 has a series of four teeth 15, it is also to be understood that the number of teeth 15 on each arm 6 may vary.

The hook 3 extends from the end 4, and in particular, from the connecting portion 8 substantially along the axis A and in the opposite direction to the arms 6.

The hook 3 can be oriented in various ways with respect to the clamp body 2: in the example of Figure 1, the hook 3 is curved around an axis which is transverse (perpendicular) to the axis A, i.e. the hook 3 is facing one of the flanks 12.

It is, however, understood that the hook 3 can be oriented in any way with respect to the clamp body 2 (and could also be rotatable with respect thereto by means of a pin, in a variant in which the clamp body 2 and the hook 3 do not form a single monolithic piece).

In use, the object to be hung is hooked to the device 1 by inserting a portion of the object into the space 13 between the arms 6. For example, a stalk of a fruit or a stalk of a bunch of grapes is inserted into the space 13.

The distance between the teeth 15 is such that the teeth firmly clamp the portion of the object inserted between them.

The portion of the object clamped between the teeth can also be arranged to pass through the device 1 along the axis A, thanks to the eccentric position of the hook 3, and also transversely, if necessary.

The device 1 with the object hooked by the teeth 15 of the arms 6 is then hung up by means of the hook 3 on an external support where required.

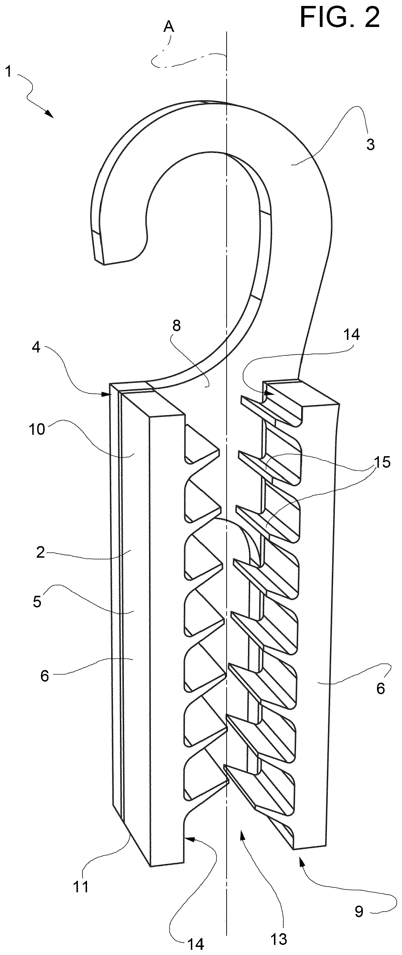

In the embodiment of Figure 2, wherein details similar to or identical with those already described are indicated with the same reference numbers, the device 1 again comprises a pair of arms 6 joined by a connecting portion 8 from which a hook 3 extends.

In this case, the arms 6 are substantially parallel to one another and carry respective series of teeth 15 which are staggered with respect to each other along the axis A (i.e. the teeth of one arm are staggered with respect to the teeth of the other arm).

The teeth 15 are also inclined with respect to the faces 14 of the arms 6 towards the root ends 10 of the arms 6, i.e. towards the end 4 of the device 1 equipped with the hook 3 and towards the connecting portion 8.

The arms 6 also have a different number of teeth 15.

However, it is to be understood that the teeth 15 can have shapes and arrangements different from what is herein described and illustrated purely by way of example, and that also the number of teeth 15 on each arm can be different from what is shown here.

Also the arms 6, as well as the connecting portion 8 and the hook 3 can have shapes different from the one here described and illustrated.

Lastly, it is understood that the hanger device as described and illustrated herein can be subject to further modifications and variations that do not depart from the scope of the accompanying claims.

## Claims

1. A hanger device (1) for hanging an object on a support, extending along a longitudinal axis (A) and comprising a clamp body (2) and a suspension hook (3) that projects from a first longitudinal end (4) of the clamp body (2); the clamp body (2) comprising a pair of arms (6) facing one another substantially along the axis (A) and spaced laterally from one another; and a connecting portion (8) substantially transverse to the axis (A) and located at said first end (4) and which joins the arms (6); the arms (6) being provided with respective transversal teeth (15) which extend towards each other from respective inner faces (14) of the arms (6); wherein the arms (6) define spaced respective closed lateral flanks (12) of the clamp body (2) and the inner space (13), laterally closed by the flanks (12), is frontally-posteriorly and superiorly-inferiorly open; the connecting portion (8) which joins the arms (6) being eccentrically arranged.

2. A device according to claim 1, wherein each arm (6) has a series of teeth (15) spaced from one another along the arm (6).

3. A device according to any one of the preceding claims, wherein the teeth (15) of each arm (6) are shaped as substantially flat blades that extend transversely to the axis (A) and are longitudinally elongated in a direction transverse to the arm (6) and are preferably substantially parallel to one another.

4. A device according to any one of the preceding claims, wherein the teeth (15) are equally spaced from one another or are variously and differently spaced from one another along each arm (6).

5. A device according to any one of the preceding claims, wherein the teeth (15) of the arms (6) are substantially aligned with each other; or the teeth (15) of the arms (6) are staggered with respect to each other.

6. A device according to any one of the preceding claims, wherein the teeth (15) are inclined with respect to the faces (14) of the arms (6) towards respective root ends (10) of the arms (6), i.e. towards said first end (4) of the device (1) equipped with the hook (3) and towards the connecting portion (8).

7. A device according to any one of the preceding claims, wherein the clamp body (2) is composed of a single monolithic piece (5).

8. A device according to any one of the preceding claims, wherein the device (1) is composed of a single monolithic piece (5) formed by the clamp body (2) and the hook (3).

9. A device according to any one of the preceding claims, wherein the arms (6) are joined to one another at respective root ends (10), joined to the connecting portion (8), and have respective free ends (11) opposite to the root ends (10), which are spaced from one another.

10. A device according to any one of the preceding claims, wherein the arms (6) are substantially rectilinear.

11. A device according to any one of the preceding claims, wherein the arms (6) are inclined towards one another, in particular converging towards one another at their respective free ends (11); or they are substantially parallel to one another.

## Patentansprüche

1. Hängevorrichtung (1) zum Aufhängen eines Objekts auf einem Träger, die sich entlang einer Längsachse (A) erstreckt und einen Klemmkörper (2) und einen Aufhängungshaken (3) aufweist, der von einem ersten Längsende (4) des Klemmkörpers (2) vorsteht; wobei der Klemmkörper (2) zwei sich im Wesentlichen entlang der Achse (A) gegenüberliegende und seitlich voneinander beabstandete Arme (6) aufweist; und einen zur Achse (A) im Wesentlichen transversalen und an dem ersten Ende (4) angeordneten Verbindungsabschnitt (8) aufweist, der die Arme (6) verbindet; wobei die Arme (6) mit jeweiligen transversalen Zähnen (15) versehen sind, die sich von einer jeweiligen Innenfläche (14) der Arme (6) zueinander hin erstrecken; wobei die Arme (6) jeweilige beabstandete geschlossene Seitenflanken (12) des Klemmkörpers (2) definieren und der von den Flanken (12) seitlich geschlossene Innenraum (13) vorne-hinten und oben-unten offen ist; wobei der Verbindungsabschnitt (8), der die Arme (6) verbindet, exzentrisch angeordnet ist.

2. Vorrichtung nach Anspruch 1, wobei jeder Arm (6) eine Reihe von Zähnen (15) hat, die entlang des Arms (6) im Abstand voneinander angeordnet sind.

3. Vorrichtung nach einem der vorstehenden Ansprüche, wobei die Zähne (15) jedes Arms (6) im Wesentlichen als flache Blätter geformt sind, die sich transversal zur Achse (A) erstrecken und in eine zum Arm (6) transversale Richtung länglich sind und vorzugsweise im Wesentlichen zueinander parallel sind.

4. Vorrichtung nach einem der vorstehenden Ansprüche, wobei die Zähne (15) entlang jedes Arms (6) in verschiedenen und unterschiedlichen Abständen voneinander angeordnet sind oder im gleichen Abstand voneinander angeordnet sind.

5. Vorrichtung nach einem der vorstehenden Ansprüche, wobei die Zähne (15) der Arme (6) im Wesentlichen miteinander ausgerichtet sind; oder die Zähne (15) der Arme (6) gegeneinander versetzt angeordnet sind.

6. Vorrichtung nach einem der vorstehenden Ansprüche, wobei die Zähne (15) bezüglich der Flächen (14) der Arme (6) zu jeweiligen Wurzelenden (10) der Arme (6) hin geneigt sind, d.h. zu dem mit dem Haken (3) versehenen ersten Ende (4) der Vorrichtung hin und zu dem Verbindungsabschnitt (8) hin.

7. Vorrichtung nach einem der vorstehenden Ansprüche, wobei der Klemmkörper (2) aus einem einzigen monolithischen Stück (5) besteht.

8. Vorrichtung nach einem der vorstehenden Ansprüche, wobei die Vorrichtung (1) aus einem einzigen monolithischen Stück (5) besteht, das durch den Klemmkörper (2) und den Haken (3) gebildet ist.

9. Vorrichtung nach einem der vorstehenden Ansprüche, wobei die Arme (6) an jeweiligen Wurzelenden (10), die mit dem Verbindungsabschnitt (8) verbunden sind, miteinander verbunden sind und jeweilige den Wurzelenden (10) gegenüberliegende freie Enden (11) haben, die voneinander beabstandet sind.

10. Vorrichtung nach einem der vorstehenden Ansprüche, wobei die Arme (6) im Wesentlichen geradlinig sind.

11. Vorrichtung nach einem der vorstehenden Ansprüche, wobei die Arme (6) sich schräg zueinander erstrecken, insbesondere sich an ihren jeweiligen freien Enden (11) annähern; oder im Wesentlichen parallel zueinander sind.

## Revendications

1. Dispositif de suspension (1) pour suspendre un objet sur un support, s'étendant le long d'un axe longitudinal (A) et comprenant un corps de serrage (2) et un crochet de suspension (3) qui fait saillie à partir d'une première extrémité longitudinale (4) du corps de serrage (2), le corps de serrage (2) comprenant une paire de bras (6) se faisant face sensiblement le long de l'axe (A) et latéralement espacés l'un de l'autre, et une partie de raccordement (8) sensiblement transversale par rapport à l'axe (A) et positionnée au niveau de ladite première extrémité (4) et qui assemble les bras (6), les bras (6) étant prévus respectivement avec des dents transversales (15) qui s'étendent les unes vers les autres à partir des faces internes (14) respectives des bras (6), **caractérisé en ce que** les bras (6) définissent des flancs latéraux fermés (12) respectifs espacés du corps de serrage (2) et **en ce que** l'espace interne (13), latéralement fermé par les flancs (12), est ouvert de manière frontale - postérieure et supérieure - inférieure, la partie de raccordement (8) qui assemble les bras (6) étant agencée de manière excentrique.

2. Dispositif selon la revendication 1, **caractérisé en ce que** chaque bras (6) a une série de dents (15) espacées les unes des autres le long du bras (6).

3. Dispositif selon l'une quelconque des revendications précédentes, **caractérisé en ce que** les dents (15) de chaque bras (6) ont la forme de lames sensiblement plates qui s'étendent de manière transversale par rapport à l'axe (A), sont longitudinalement allongées dans une direction transversale au bras (6) et sont de préférence sensiblement parallèles entre elles.

4. Dispositif selon l'une quelconque des revendications précédentes, **caractérisé en ce que** les dents (15) sont espacées à égale distance les unes des autres ou sont espacées de manière diverse et différente les unes des autres le long de chaque bras (6).

5. Dispositif selon l'une quelconque des revendications précédentes, **caractérisé en ce que** les dents (15) des bras (6) sont sensiblement alignées les unes par rapport aux autres, ou bien les dents (15) des bras (6) sont en quinconce les unes par rapport aux autres.

6. Dispositif selon l'une quelconque des revendications précédentes, **caractérisé en ce que** les dents (15) sont inclinées par rapport aux faces (14) des bras (6) vers des extrémités d'emplanture (10) respectives des bras (6), c'est-à-dire vers ladite première extrémité (4) du dispositif (1) dotée du crochet (3) et vers la partie de raccordement (8).

7. Dispositif selon l'une quelconque des revendications précédentes, **caractérisé en ce que** le corps de serrage (2) est composé d'une seule pièce monolithique (5).

8. Dispositif selon l'une quelconque des revendications précédentes, **caractérisé en ce que** le dispositif (1) est composé d'une seule pièce monolithique (5) formée par le corps de serrage (2) et le crochet (3).

9. Dispositif selon l'une quelconque des revendications précédentes, **caractérisé en ce que** les bras (6) sont assemblés entre eux au niveau des extrémités d'emplanture (10) respectives à la partie de raccordement (8), et ont des extrémités libres (11) respectives opposées aux extrémités d'emplanture (10), qui sont espacées l'une de l'autre.

10. Dispositif selon l'une quelconque des revendications précédentes, **caractérisé en ce que** les bras (6) sont sensiblement rectilignes.

11. Dispositif selon l'une quelconque des revendications précédentes, **caractérisé en ce que** les bras (6) sont inclinés les uns vers les autres, en particulier convergeant les uns vers les autres au niveau de leurs extrémités libres (11) respectives, ou bien sont sensiblement parallèles entre eux.
